# FASCICULE DE BREVET EUROPEEN

(11) **EP 3 814 622 B1**
(45) Date de publication et mention de la délivrance du brevet: **29.03.2023**
(21) Numéro de dépôt: 19746111.4
(22) Date de dépôt: 24.05.2019
(51) Int. Cl.: F02K 1/82, B32B 3/12, B64D 33/02, F02C 7/24, G10K 11/172, B32B 7/08, B32B 3/06, B32B 3/10, B32B 3/30

(54) **PANNEAU D'ATTÉNUATION ACOUSTIQUE POUR NACELLE DE TURBORÉACTEUR D'AÉRONEF**
SCHALLDÄMMPLATTE FÜR EINE FLUGZEUGTRIEBWERKSGONDEL
ACOUSTIC ATTENUATION PANEL FOR AN AIRCRAFT JET ENGINE NACELLE

(30) Priorité: 24.05.2018 FR 1854404
(43) Date de publication de la demande: 05.05.2021
(73) Titulaire: Safran Nacelles, 76700 Gonfreville-l'Orcher (FR)
(72) Inventeur: LE BOULICAUT, Loïc, Hervé, André, 76700 Gonfreville L'Orcher (FR); THOREL, Christophe, 76700 Gonfreville L'Orcher (FR); VERGER, Simon, 76700 Gonfreville L'Orcher (FR); PREAU, Mathieu, 76700 Gonfreville L'Orcher (FR)
(74) Mandataire: Germain Maureau
(86) Numéro de dépôt international: PCT/FR2019/051205
(87) Numéro de publication internationale: WO 2019/224499

(56) Documents cités:
- EP-A1- 2 604 426
- WO-A1-98/06564
- US-A- 4 969 535

## Description

La présente invention se rapporte à un panneau d'atténuation acoustique pour nacelle de turboréacteur d'aéronef et plus particulièrement à un volet d'inverseur de poussée formé à partir d'un tel panneau, et à un procédé de fabrication de ce panneau d'atténuation acoustique.

Une nacelle de turboréacteur présente généralement une structure sensiblement tubulaire comprenant une entrée d'air en amont du turboréacteur, une section médiane destinée à entourer une soufflante du turboréacteur, une section aval destinée à entourer la chambre de combustion du turboréacteur et intégrant des moyens d'inversion de poussée. La nacelle est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle.

Les deux flux d'air sont éjectés du turboréacteur par l'arrière de la nacelle. Le rôle d'un inverseur de poussée est, lors de l'atterrissage d'un aéronef, d'améliorer la capacité de freinage de celui-ci en redirigeant vers l'avant au moins une partie de l'air éjecté du turboréacteur.

Dans cette phase, l'inverseur obstrue au moins une partie de la veine du flux froid et dirige ce flux vers l'avant de la nacelle, générant de ce fait une contrepoussée qui vient s'ajouter au freinage des roues et aérofreins de l'avion.

De manière générale, la structure d'un inverseur comprend un volet ou capot d'inverseur déplaçable entre, d'une part, une position de jet inversé dans laquelle il ouvre dans la nacelle un passage destiné au flux d'air dévié, et d'autre part, une position de jet direct dans laquelle il ferme ce passage.

Dans le cas d'un inverseur à grilles de déviation, également appelées grilles ou cascades d'inverseur de poussée, la réorientation du flux d'air est effectuée par des grilles de déviation, associées à des volets d'inversion venant bloquer au moins partiellement la veine de circulation d'air, le volet n'ayant qu'une simple fonction de coulissage visant à découvrir ou recouvrir ces grilles d'inverseur de poussée.

Les volets comprennent une structure principale en forme de panneau, appelé panneau d'atténuation acoustique, réalisant cette obturation.

Les panneaux d'atténuation acoustique présentent habituellement une structure stratifiée et comprennent une couche centrale à structure alvéolée, formant une âme alvéolée.

L'âme alvéolée est constituée d'un nid d'abeille et est positionnée entre deux peaux couvrant des faces opposées de cette couche centrale. Les peaux sont normalement en tissu de carbone imprégné de résine époxy durcie par une cuisson.

Une des peaux, dite peau acoustique, est située du côté de la veine. Elle est généralement munie d'une multitude de perforations (micro-perforations) qui mettent en communication la veine avec les alvéoles de la couche centrale et absorbent une partie des bruits produits par le turboréacteur pendant son service normal.

Ces micro-perforations sont classiquement opérées à travers la peau par des forets après l'assemblage des peaux à la couche centrale.

Les procédés de fabrication connus sont assez lents et coûteux, impliquant de nombreuses opérations successives.

Un autre inconvénient est que la perforation de la peau du côté de la veine est limitée en pratique à environ 50 % de la superficie du panneau (car il n'est pas possible de réaliser les perforations aux bords des âmes des alvéoles et près des fixations des chapes) pour des raisons de résistance mécanique, ce qui réduit donc l'absorption du bruit.

Par ailleurs, d'autres procédés d'assemblage existent mais sont coûteux et/ou difficile à mettre en oeuvre. C'est le cas du collage entre les différents éléments tel que décrit dans le document US 4001473.

Selon un procédé de l'art antérieur décrit dans le document US 4001473, deux structures comprenant chacune un réseau de parois alvéolaires et une peau sont enchevêtrées puis collées ensemble pour former un panneau d'atténuation acoustique comprenant une âme en nid d'abeille prise en sandwich entre une peau acoustique et une peau pleine.

Un inconvénient de ce procédé de fabrication est sa complexité et sa difficulté de mise en oeuvre car le collage ou le soudage d'une peau avec des parois d'alvéoles est très difficile à réaliser, entrainant des coûts supplémentaires.

De plus, la rigidité du panneau d'atténuation acoustique n'est pas optimisée, de même pour les performances acoustiques.

Et en cas d'endommagement sur la peau acoustique provoquée par des impacts, il n'est pas possible de changer très facilement la partie endommagée car les deux réseaux de parois alvéolaires respectifs sont collés ensemble.

Un autre procédé connu est décrit dans le document EP2604426 A1.

La présente invention vise à résoudre tout ou partie de ces inconvénients en proposant un panneau d'atténuation acoustique pour nacelle de turboréacteur d'aéronef plus simple à mettre en oeuvre et à réparer, plus rigide et dans lequel la surface acoustique utile est optimisée.

L'invention concerne un panneau d'atténuation acoustique pour nacelle de turboréacteur d'aéronef, comportant une âme centrale alvéolaire interposée entre une peau avant acoustique comprenant des perforations et une peau arrière, le panneau d'atténuation acoustique comportant une structure avant et une structure arrière.

Selon l'invention, la structure avant comporte la peau avant acoustique et un premier réseau de parois alvéolaires. La structure arrière comporte la peau arrière et un deuxième réseau de parois alvéolaires. Les premier et deuxième réseaux de parois alvéolaires sont complémentaires de sorte à former, en position assemblée, l'âme centrale alvéolaire. La structure avant et la structure arrière étant positionnées en regard l'une de l'autre et de façon à ce que le réseau de parois alvéolaires d'une structure soit espacé de la peau de l'autre structure lui faisant face (ou opposé) d'un jeu d.

De préférence, le jeu d est inférieur à 2 mm et de préférence inférieur à 1,5 mm.

Le jeu d est avantageusement inférieur à 2 mm et de préférence inférieur à 1,5 mm, tout en étant strictement supérieur à zéro.

Les premier et deuxième réseaux de parois alvéolaires sont entrecroisés. Ainsi, les structures avant et arrière sont entrecroisées.

Les deux structures comprennent des bordures périphériques respectives fixées entre elles.

Ainsi, les structures avant et arrière comprenant chacune une bordure périphérique, lesdites bordures étant fixées l'une à l'autre pour l'assemblage des structures avant et arrière.

Chaque réseau de parois alvéolaires d'une structure est formé de parois faisant saillie sur une surface interne respective de la peau de cette structure.

Selon un mode de réalisation possible, des encoches sont prévues sur les parois de chaque réseau de parois alvéolaires. Les encoches des parois d'un réseau de parois alvéolaires sont agencées pour s'insérer de façon complémentaire dans les encoches des parois de l'autre réseau de parois alvéolaires, permettant l'emboitement du premier réseau de parois alvéolaires de la structure avant dans le deuxième réseau de parois alvéolaires de la structure arrière.

Selon un autre mode de réalisation possible, les réseaux de parois alvéolaires comprennent chacun des parois de section tronconique se chevauchant l'une par rapport à l'autre pour permettre l'emboitement du premier réseau de parois alvéolaires de la structure avant dans le deuxième réseau de parois alvéolaires de la structure arrière.

Après assemblage, la structure arrière peut présenter des motifs alvéolaires décalés d'une demi-période par rapport aux motifs alvéolaires de la structure avant.

L'invention concerne également un volet d'inverseur de poussée pour nacelle de turboréacteur d'aéronef formé d'un panneau d'atténuation acoustique tel que défini précédemment.

L'invention concerne également un procédé de fabrication d'un panneau d'atténuation acoustique pour nacelle de turboréacteur d'aéronef tel que défini précédemment.

Le procédé comprend les étapes suivantes :
- obtention d'une structure avant comportant une peau avant acoustique et un premier réseau de parois alvéolaires,
- obtention d'une structure arrière comportant une peau arrière et un deuxième réseau de parois alvéolaires, et
- assemblage de la structure avant à la structure arrière pour former le panneau d'atténuation acoustique, les premier et deuxième réseaux de parois alvéolaires coopérant ensembles de sorte à former une âme centrale alvéolaire positionnée entre la peau avant acoustique et la peau arrière, la structure avant et la structure arrière étant positionnées en regard l'une de l'autre et de façon à ce que le réseau de parois alvéolaires d'une structure soit espacé de la peau de l'autre structure lui faisant face par un jeu d.

Les structures avant et arrière comprennent chacune une bordure périphérique, lesdites bordures étant fixées l'une à l'autre pour l'assemblage des structures avant et arrière.

De préférence, lors de l'étape d'assemblage, le premier réseau de parois alvéolaires de la structure avant est emboîté dans le deuxième réseau de parois alvéolaires de la structure arrière.

Lors de l'étape d'assemblage, le premier réseau de parois alvéolaires de la structure avant est emboîté dans le deuxième réseau de parois alvéolaires de la structure arrière au moyen d'encoches prévues sur des parois formant chaque réseau de parois alvéolaires. Les encoches des parois de chaque réseau de parois alvéolaires sont agencées pour s'insérer l'une dans l'autre.

Avantageusement, lors de l'étape d'assemblage, les structures sont fixées entre elles uniquement au niveau de bordures périphériques respectives prévues sur chacune des deux structures.

L'invention fournit ainsi un panneau d'atténuation acoustique pour nacelle de turboréacteur d'aéronef plus simple à mettre en oeuvre et à réparer, plus rigide et dans lequel la surface acoustique utile est optimisée.

L'assemblage des structures est réalisé en une seule étape.

Le procédé de l'invention permet de réduire le temps de fabrication et une diminution substantielle des coûts de fabrication.

En effet, chacune des première et deuxième structures forme une « demicoque » qui, assemblées ensemble, permet d'obtenir un panneau d'atténuation acoustique. Il est donc facile de fabriquer ces deux structures de manière indépendante puis de les assembler de manière facilité par rapport à l'art antérieur.

L'emboitement avec les encoches permet d'améliorer la raideur du panneau. La solution proposée permet de mieux absorber les contraintes mécaniques.

Il est également possible d'obtenir jusqu'à 80% de surface acoustique.

Du fait que ces structures sont en regard et espacées l'une de l'autre, il existe un jeu entre ces deux structures sur toute l'étendue de l'âme acoustique, sauf éventuellement au niveau de singularités liées à la fixation de ferrures par exemple.

Ce jeu, inférieur à 2 mm, est prévu entre les deux structures de manière à garantir le bon montage de la pièce et éviter les vibrations et/ou déformations durant son utilisation. Ce jeu doit toutefois être limité pour ne pas dégrader ses performances acoustiques comme raisonneur.

La maintenance est également facilitée. En cas d'endommagement sur la peau acoustique provoquée par des impacts, il est possible de changer très facilement la partie endommagée en enlevant les fixations et en remontant une nouvelle demicoque.

D'autres caractéristiques et avantages de l'invention ressortiront à la lecture de la description qui suit, donnée uniquement à titre d'exemple, en référence à:
- la figure 1 représentant une vue éclatée d'un panneau d'atténuation acoustique selon un mode de réalisation de l'invention ;
- la figure 2 représentant une structure avant du panneau d'atténuation acoustique ;
- la figure 3 représentant une vue en coupe du panneau d'atténuation acoustique ;
- la figure 4 représentant l'intérieur d'une structure avant d'un volet d'inverseur de poussée formé à partir d'un panneau d'atténuation acoustique ;
- la figure 5 représentant l'extérieur de cette structure avant ;
- la figure 6 représentant l'extérieur d'une structure arrière d'un volet d'inverseur de poussée formé à partir d'un panneau d'atténuation acoustique ;
- la figure 7 représentant l'intérieur de la structure arrière ;
- la figure 8 représentant une vue de derrière d'un volet avec des ferrures ;
- la figure 9 représentant un premier et un deuxième réseau de parois alvéolaires selon un autre mode de réalisation ;
- la figure 10 représentant un premier et un deuxième réseau de parois alvéolaires selon un autre mode de réalisation ;
- la figure 11 représentant deux réseaux de parois alvéolaires s'emboitant sans encoches selon un autre mode de réalisation ;
- la figure 12 représentant les deux réseaux de parois alvéolaires s'emboitant sans encoches selon un autre mode de réalisation ;
- la figure 13 représentant les deux réseaux de parois alvéolaires s'emboitant sans encoches selon un autre mode de réalisation.

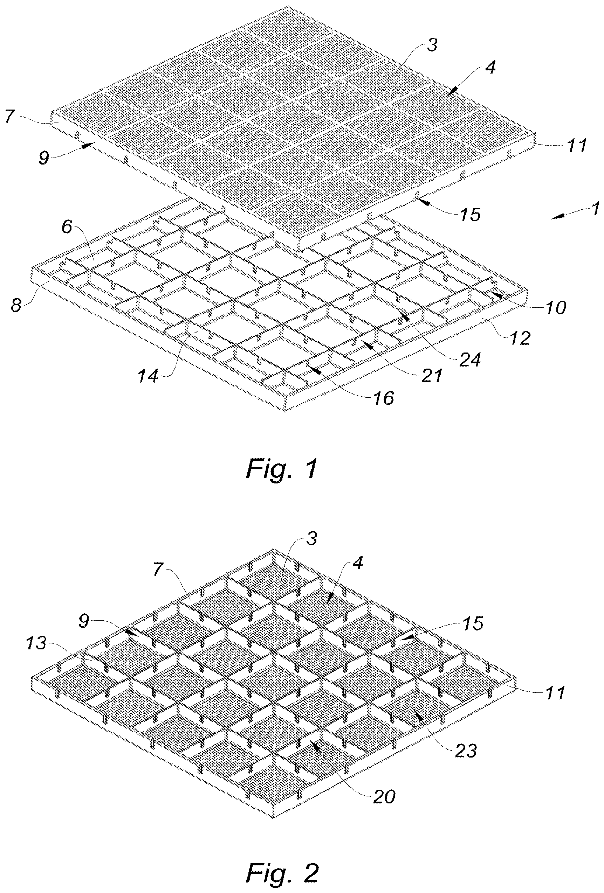

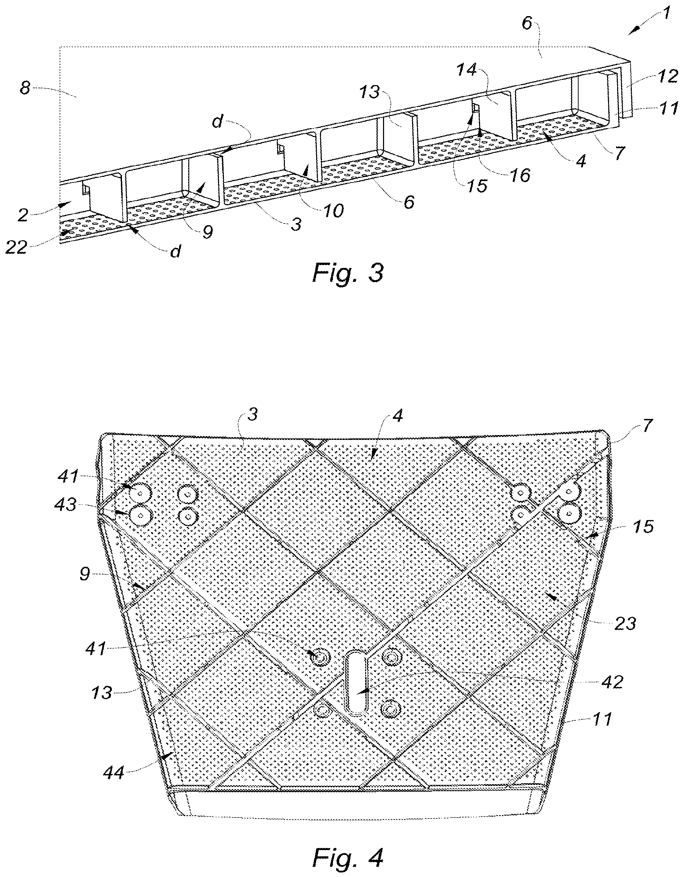

Les figures 1 et 3 représentent un panneau d'atténuation acoustique 1 pour nacelle de turboréacteur d'aéronef selon un mode de réalisation de l'invention.

Ce panneau d'atténuation acoustique 1 comporte une âme centrale alvéolaire 2 interposée entre une peau avant acoustique 3 comprenant des perforations 4 et une peau arrière 6.

Les termes « avant » et « arrière » ont été définis à titre illustratif et ne sont pas limitatifs.

Le panneau d'atténuation acoustique 1 comporte une structure avant 7 et une structure arrière 8.

Selon l'invention, la structure avant 7 comporte la peau avant acoustique 3 et un premier réseau de parois alvéolaires 9 solidaire de celle-ci.

La structure arrière 8 comporte la peau arrière 6 et un deuxième réseau de parois alvéolaires 10 solidaire de celle-ci.

Les premier 9 et deuxième 10 réseaux de parois alvéolaires sont complémentaires et coopèrent ensemble de sorte à former, en position assemblée, l'âme centrale alvéolaire 2.

La structure avant 7 et la structure arrière 8 sont positionnées en regard l'une de l'autre et de façon à ce que le réseau de parois alvéolaires 9, 10 d'une structure 7, 8 soit espacé de la peau 3, 6 de l'autre structure7, 8 lui faisant face d'un espace d, comme illustré sur la figure 3.

Autrement dit, le premier réseau de parois alvéolaires 9 de la structure avant 7 est espacé de la peau arrière 6 de la structure arrière 8 d'un espace d.

De même, le deuxième réseau de parois alvéolaires 10 de la structure arrière 8 est espacé de la peau avant acoustique 3 de la structure avant 7 d'un espace d. Cet espace d peut être identique ou différent de l'espace d séparant le premier réseau de parois alvéolaires 9 de la structure avant 7 de la peau arrière 6 de la structure arrière 8.

L'espace d ou jeu est avantageusement inférieur à 2 mm et de préférence inférieur à 1,5 mm sans être égal à zéro. Ce jeu permet le drainage des fluides.

Les deux structures 7, 8 comprennent des bordures périphériques 11, 12 respectives fixées entre elles par collage ou soudage ou assemblage mécanique par exemple.

Chaque réseau de parois alvéolaires 9, 10 d'une structure 7, 8 est formé de parois 13, 14 faisant saillie sur une surface interne 44, 47 respective d'une des peaux 3, 6 de cette structure 7, 8.

Des encoches 15, 16 sont prévues sur les parois 13, 14 de chaque réseau de parois alvéolaires 9, 10.

Les encoches 15, 16 des parois 13, 14 d'un réseau de parois alvéolaires 9, 10 sont agencées pour s'insérer de façon complémentaire dans les encoches 15, 16 des parois 13, 14 de l'autre réseau de parois alvéolaires 9, 10, permettant l'emboitement du premier réseau de parois alvéolaires 9 de la structure avant 7 dans le deuxième réseau de parois alvéolaires 10 de la structure arrière 8.

Les encoches 15, 16 opposées et complémentaires sont donc insérées l'une dans l'autre deux à deux.

Les encoches 15, 16 sont de forme oblongue et s'étendent le long des parois 13, 14 à partir d'un rebord interne 20, 21 des parois 13, 14 et vers la peau 3, 6.

De façon plus précise, c'est ces rebords internes 20, 21 des parois 13, 14 qui sont distants des peaux 3, 6 qui leur font face.

La hauteur des encoches peut varier est être plus faible au niveau de zones structurelles pour maintenir cet espace d.

La bordure périphérique 11 de la structure avant 7 comprend des encoches 15.

La bordure périphérique 12 de la structure arrière 8 ne comprend pas d'encoches.

Après emboîtement, la bordure périphérique 12 de la structure arrière 8 entoure la bordure périphérique 11 de la structure avant 7 et vice versa.

Le premier réseau de parois alvéolaires 9 et le deuxième réseau de parois alvéolaires 10 présentent des alvéoles 23, 24 de forme carrée pour former une âme centrale alvéolaire 2 avec des alvéoles 22 parallélépipédiques de sections carrée. D'autres formes sont possibles comme des formes rectangulaires, hexagonales, circulaires ou quelconques.

Les alvéoles 23, 24 ou cellules acoustiques présentent des dimensions de 100 mm X 100 mm ou de préférence de 50 mm X 50 mm.

La géométrie des alvéoles ou cellules acoustiques doit être inscrite de préférence dans un carré de 49 mm X 49 mm pour avoir la même efficacité que pour la solution connue appelée NIDA pour une application sur inverseur de poussée.

D'autres dimensions sont également possibles.

D'autres applications sont également possibles dans le domaine de l'aéronautique ou autre.

La figure 1 représente une structure arrière 8 ayant des motifs alvéolaires décalés d'une demi-période, ou demi-pas, par rapport aux motifs alvéolaires de la structure avant 7 suivant deux directions non parallèles pour permettre un emboîtement parfait.

Autrement dit, les alvéoles 24 de la structure arrière 8 qui sont adjacentes à la bordure périphérique 12 ont un côté ayant une largeur réduite de moitié.

La structure avant 7 comprend des alvéoles 23 entières le long de la bordure périphérique 11.

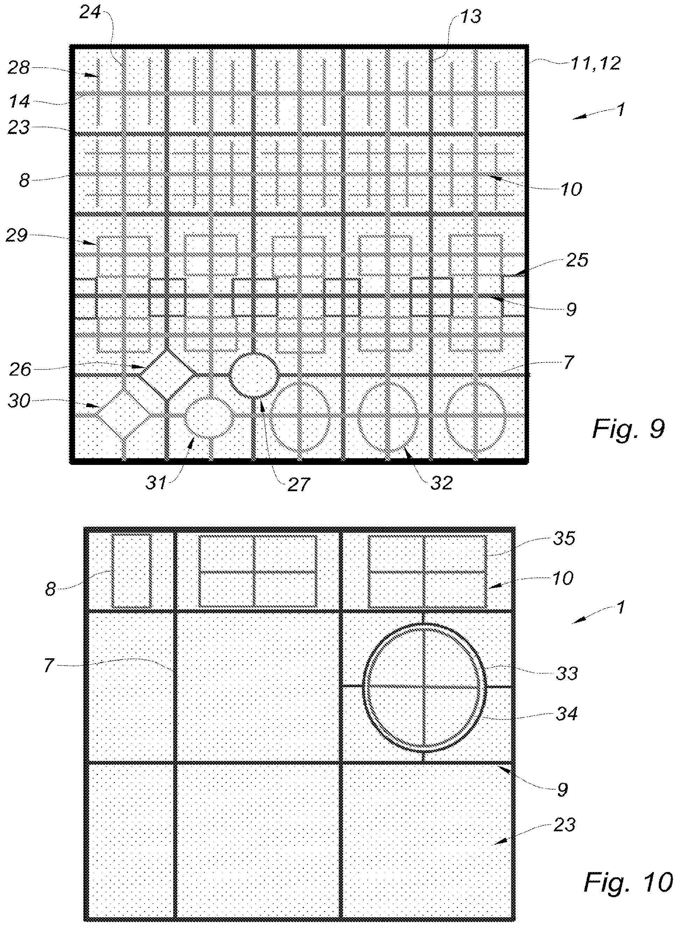

La figure 9 représente un premier et un deuxième réseau de parois alvéolaires 9, 10 selon un autre mode de réalisation.

Le premier réseau de parois alvéolaires 9 comprend des alvéoles 23 de section carrée comme décrit précédemment et des alvéoles additionnelles 25 insérées dans les alvéoles 23. Les alvéoles additionnelles 25 sont de section rectangulaire ou carrée et sont positionnées autour des intersections formées par deux parois 13. Ils permettent de réduire la taille des cellules pour rigidifier la structure avant 7.

Le premier réseau de parois alvéolaires 9 comprend des alvéoles additionnelles en forme de losange 26 ou d'anneau 27 aux intersections formées par deux parois 13.

Le deuxième réseau de parois alvéolaires 10 comprend des alvéoles 24 de section rectangulaires ou carrée comme décrit précédemment et des parois additionnelles 28 insérées dans les alvéoles 24.

Les parois additionnelles 28 sont perpendiculaires aux parois 14 du deuxième réseau de parois alvéolaires 10.

Le deuxième réseau de parois alvéolaires 10 comprend des alvéoles additionnelles de section carrée 29, en forme de losange 30, de section circulaire 31 et de section ovoïde 32 centrées aux intersections des parois 14.

La figure 10 représente un premier et un deuxième réseau de parois alvéolaires 9, 10 selon un autre mode de réalisation.

Le premier réseau de parois alvéolaires 9 comprend des alvéoles 23 de section carrée comme décrit précédemment et une alvéole additionnelle de section elliptique 33 localisée dans une alvéole 23.

Le deuxième réseau de parois alvéolaires 10 comprend des alvéoles de section rectangulaire 35 agencées pour être insérées dans une alvéole 23 du premier réseau de parois alvéolaires 9 et une alvéole de section elliptique 34 agencée pour être insérée dans une alvéole additionnelle de section elliptique 33 du premier réseau de parois alvéolaires 9 lors de l'assemblage des structures 7, 8.

Quelle que soit la forme de l'alvéole additionnelle et le mode de réalisation, celle-ci est espacée de la peau 3, 6 d'une structure 7, 8 lui faisant face de l'espace d définit précédemment.

L'ajout de profils ou alvéoles additionnelles fermées « quelconques » permet de garder le volume de cellule équivalant à 50 mm x 50 mm.

En variante, les deux structures 7, 8 peuvent s'emboiter sans encoches.

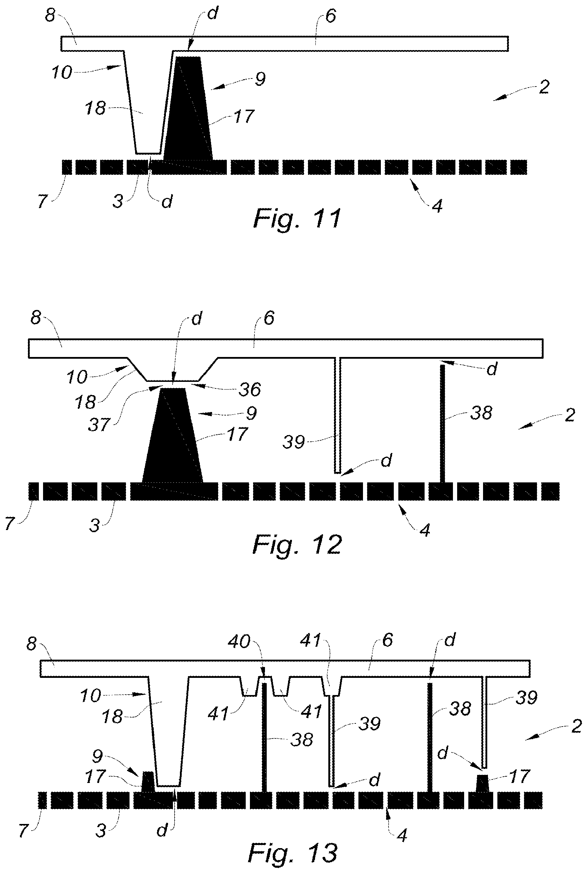

La figure 11 représente deux réseaux de parois alvéolaires 9, 10 s'emboitant sans encoches selon un mode de réalisation.

Les réseaux de parois alvéolaires 9, 10 comprennent chacun des parois de section tronconique 17, 18 se chevauchant l'une par rapport à l'autre pour permettre l'emboitement du premier réseau de parois alvéolaires 9 de la structure avant 7 dans le deuxième réseau de parois alvéolaires 10 de la structure arrière 8.

Les parois de section tronconique 17, 18 font saillies sur la surface interne de la peau 3, 6 de la structure 7, 8 qui lui est associée.

Les parois de section tronconique 17, 18 coulissent l'une sur l'autre lors de l'emboitement des structures 7, 8. Ce coulissement entraine un blocage des structures 7, 8 l'une par rapport à l'autre.

Un espace d est maintenant entre les parois de section tronconique 17, 18 et la peau 3, 6 lui faisant face.

La figure 12 représente deux réseaux de parois alvéolaires 9, 10 s'emboitant sans encoches selon un autre mode de réalisation.

La structure avant 7 comprend une peau avant acoustique 3 comprenant des perforations 4 et des parois de section tronconique avant 17 faisant saillies perpendiculairement sur la peau avant acoustique 3.

La structure arrière 8 comporte une peau arrière 6 et des parois de section tronconique arrière 18 faisant saillies sur la peau 6.

Les parois de section tronconique 17, 18 sont positionnées en regard les unes par rapport aux autres après assemblage de façon à ce qu'un espace d soit formé entre les faces supérieures 36, 37 respectives des parois de section tronconique 17, 18.

Les parois de section tronconique avant 17 présentent une hauteur plus importante que les parois de section tronconique arrière 18 et vice versa.

La structure avant 7 comprend éventuellement des parois additionnelles avant 38 perpendiculaires à la peau avant acoustique 3.

La structure arrière 8 comprend éventuellement des parois additionnelles arrière 39 perpendiculaires à la peau arrière 6.

L'extrémité libre des parois additionnelles avant et arrières 38, 39 est espacée de la peau 3, 6 de la structure 7, 8 lui faisant face d'un espace d.

D'autres variantes sont également possibles comme représentées sur la figure 13.

La structure avant 7 comprend une peau avant acoustique 3 comprenant des perforations 4 et des parois de section tronconique avant 17 faisant saillies sur la peau avant acoustique 3.

La structure arrière 8 comporte une peau arrière 6 et des parois de section tronconique arrière 18 faisant saillies sur la peau 6.

Les parois de section tronconique 17, 18 coulissent l'une sur l'autre lors de l'emboitement des structures 7, 8.

Les parois de section tronconique avant 17 ayant une fonction de raidisseur présentent une hauteur plus petite que les parois de section tronconique arrière 18 et vice versa.

La structure avant 7 comprend des parois additionnelles avant 38 faisant saillies sur la peau avant acoustique 3.

La structure arrière 8 comprend des parois additionnelles arrière 39 faisant saillies sur la peau arrière 6.

La structure arrière 8 comprend des parois de section tronconique arrière de plus petite dimension 41 positionné côte à côte pour former une chicane 40.

Une paroi additionnelle avant 38 de la structure avant 7 est positionnée en regard de la chicane 40.

Des parois de section tronconique avant 17 ayant une fonction de raidisseur peuvent être positionnées en regard d'une paroi additionnelle arrière 39. Un jeu ou espace d est prévu entre ces éléments.

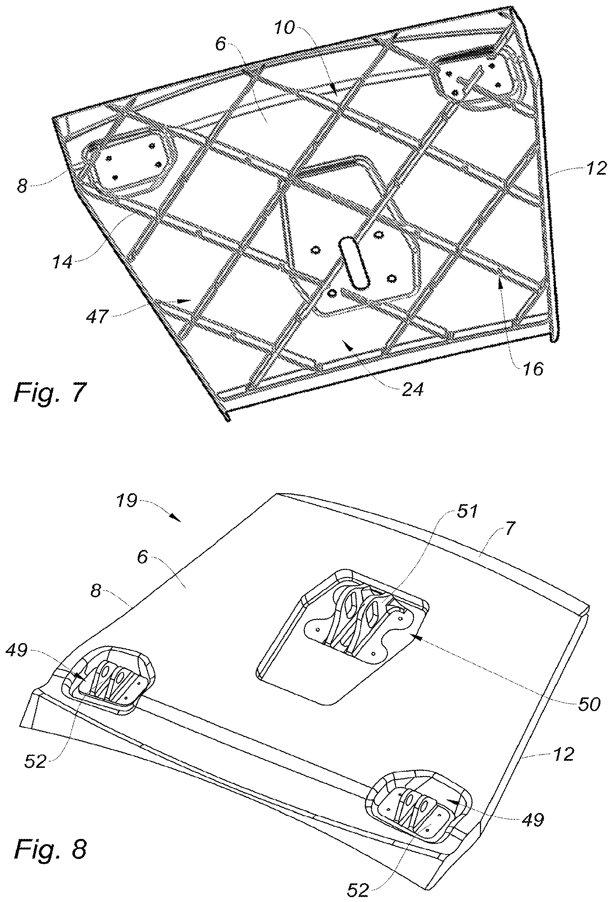

L'invention concerne également un volet ou capot d'inverseur de poussée 19 pour nacelle de turboréacteur d'aéronef formé d'un panneau d'atténuation acoustique 1 tel que décrit précédemment et illustré sur la figure 8.

Le volet d'inverseur de poussée 19 comprend une âme centrale alvéolaire 2 interposée entre une peau avant acoustique 3 comprenant des perforations 4 et une peau arrière 6.

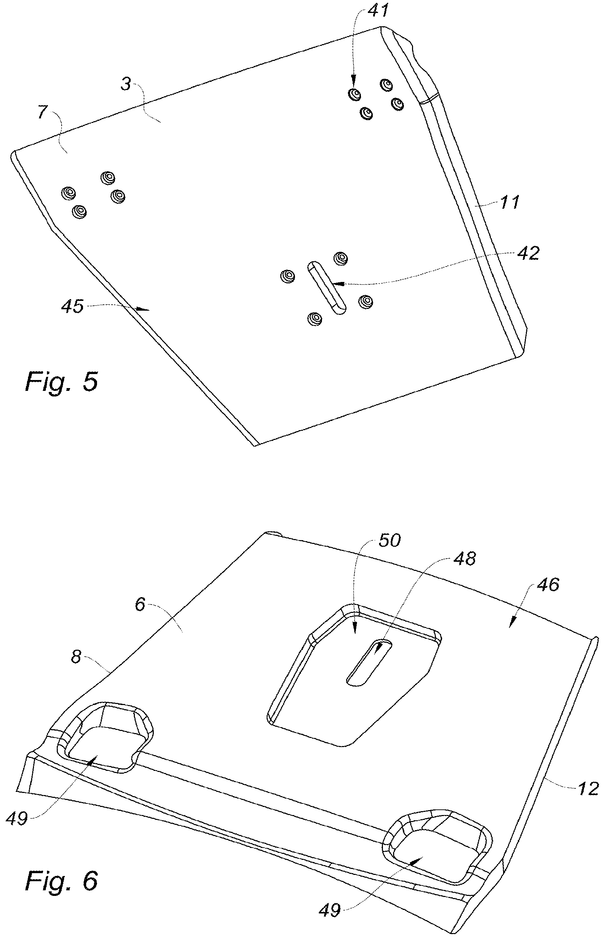

Le panneau d'atténuation acoustique 1 comporte une structure avant 7 appelé demi-capot avant figures 4 et 5 et une structure arrière 8 appelé demi-capot arrière figures 6 et 7.

La structure avant 7 comporte la peau avant acoustique 3 et un premier réseau de parois alvéolaires 9 fixé à celle-ci.

La structure arrière 8 comporte la peau arrière 6 et un deuxième réseau de parois alvéolaires 10 fixé à celle-ci.

Les premier 9 et deuxième 10 réseaux de parois alvéolaires sont complémentaires de sorte à former, en position assemblée, l'âme centrale alvéolaire 2.

La structure avant 7 et la structure arrière 8 sont positionnées en regard l'une de l'autre et de façon à ce que le réseau de parois alvéolaires 9, 10 d'une structure 7, 8 soit espacé de la peau 3, 6 de l'autre structure 7, 8 lui faisant face d'un espace d non nul. Cet espace d est inférieur à 5 mm, par exemple. Il est avantageusement inférieur à 2 mm et de préférence inférieure à 1,5 mm.

La structure avant 7 et la structure arrière 8 sont fixées par collage, soudage ou clipsage.

Les structures 7, 8 peuvent être en thermoplastique DLF^{©}, thermodurcissable DLF^{©}, hybride thermoplastique / métallique ou en composite céramique ou autres matériaux en fonction des critères mécaniques et environnemental de la pièce.

Lors de l'étape de fabrication, détaillée ultérieurement, des orifices 41 entourés d'une collerette 43 sont prévus pour fixer des ferrures. Un orifice oblong 42 est prévu pour le passage d'une bielle.

La structure avant 7 comprend une face interne 44 sur laquelle le premier réseau de parois alvéolaires 9 fait saillie.

La peau avant acoustique 3 de la structure avant 7 comprend une face externe 45, comme illustrée sur la figure 5.

La figure 6 illustre la structure arrière 8 comprenant une face externe 46.

La structure arrière 8 comprend un orifice oblong 48 pour le passage d'une bielle.

Des chapes ou cavités 49, 50 sont formées lors du moulage de la structure arrière 8 pour recevoir des ferrures. Les chapes 49, 50 sont intégrées dans la peau arrière 6.

La peau arrière 6 de la structure arrière 8 comprend une face interne 47, comme illustré sur la figure 7.

Le deuxième réseau de parois alvéolaires 10 fait saillie perpendiculairement sur la face interne 47 de la structure arrière 8.

La figure 8 représente une vue de derrière d'un volet d'inverseur de poussée 19 avec des ferrures 51, 52 dont une ferrure de bielle 51 et deux ferrures d'articulation 52.

Les ferrures peuvent être des pièces rapportées et fixées à la peau arrière 6 de la structure arrière 8 par collage, soudage ou clipsage.

Les ferrures peuvent être en variante des ferrures co-injectées lors de l'étape de fabrication de la structure arrière 8.

L'invention concerne également un procédé de fabrication d'un panneau d'atténuation acoustique 1 pour nacelle de turboréacteur d'aéronef tel que défini précédemment.

Le procédé comprend une étape d'obtention d'une structure avant 7 comportant une peau avant acoustique 3 et un premier réseau de parois alvéolaires 9, et une étape d'obtention d'une structure arrière 8 comportant une peau arrière 6 et un deuxième réseau de parois alvéolaires 10.

Quelle que soit la structure 7, 8, le réseau de paroi alvéolaire 9, 10 et la peau 3, 6 sont fabriqués ensemble par moulage d'un polymère thermoplastique permettant d'obtenir un composite injecté ou moulé en une seule étape.

Les perforations 4 sont réalisées sur la peau avant acoustique 3 pendant le moulage ou bien après.

Les chapes 49, 50 sont formées lors du moulage de la structure arrière 8.

Les ferrures 51, 52 sont ensuite fixées à la structure arrière 8.

Le procédé comprend une étape d'assemblage de la structure avant 7 à la structure arrière 8 pour former le panneau d'atténuation acoustique 1.

Les premier 9 et deuxième 10 réseaux de parois alvéolaires coopèrent ensembles de sorte à former une âme centrale alvéolaire 2 positionnée entre la peau avant acoustique 3 et la peau arrière 6.

La structure avant 7 et la structure arrière 8 sont positionnées en regard l'une de l'autre et de façon à ce que le réseau de parois alvéolaires 9, 10 d'une structure 7, 8 soit espacé de la peau 3, 6 de l'autre structure 7, 8 lui faisant face ou opposée par un espace d non nul mais inférieur à 2 mm.

De manière générale, lors de l'étape d'assemblage, le premier réseau de parois alvéolaires 9 de la structure avant 7 est emboîté dans le deuxième réseau de parois alvéolaires 10 de la structure arrière 8. Différents moyens d'emboîtage sont possibles.

De préférence, lors de l'étape d'assemblage, le premier réseau de parois alvéolaires 9 de la structure avant 7 est emboîté (ou enchevêtré) dans le deuxième réseau de parois alvéolaires 10 de la structure arrière 8 au moyen d'encoches 15, 16, décrites précédemment, prévues sur des parois 13, 14 formant chaque réseau de parois alvéolaires 9, 10.

Les encoches 15, 16 des parois 13, 14 de chaque réseau de parois alvéolaires 9, 10 sont agencées pour s'insérer l'une dans l'autre.

Lors de l'étape d'assemblage, les structures 7, 8 sont fixées entre elles au niveau de bordures périphériques 11, 12 respectives prévues sur chacune des deux structures 7, 8.

La fixation peut être mécanique avec des moyens de fixation. En alternative, la fixation peut être réalisée par collage ou soudage sur les bordures périphériques 11, 12 des pièces.

## Revendications

1. Panneau d'atténuation acoustique (1) pour nacelle de turboréacteur d'aéronef, comportant une âme centrale alvéolaire (2) interposée entre une peau avant acoustique (3) comprenant des perforations (4) et une peau arrière (6), le panneau d'atténuation acoustique (1) comportant une structure avant (7) et une structure arrière (8), tel que la structure avant (7) comporte la peau avant acoustique (3) et un premier réseau de parois alvéolaires (9), la structure arrière (8) comportant la peau arrière (6) et un deuxième réseau de parois alvéolaires (10), les structures avant (7) et arrière (8) comprenant chacune une bordure périphérique (11, 12), lesdites bordures (11, 12) étant fixées l'une à l'autre pour l'assemblage des structures avant (7) et arrière (8), les premier (9) et deuxième (10) réseaux de parois alvéolaires étant complémentaires de sorte à former, en position assemblée, l'âme centrale alvéolaire (2),
**caractérisé en ce que** :
- la structure avant (7) et la structure arrière (8) sont positionnées en regard l'une de l'autre et de façon à ce que le réseau de parois alvéolaires (9, 10) d'une structure (7, 8) soit espacé de la peau (3, 6) de l'autre structure (7, 8) lui faisant face d'un jeu d.

2. Panneau d'atténuation acoustique (1) selon la revendication 1, **caractérisé en ce que** le jeu d est inférieur à 2 mm et de préférence inférieur à 1,5 mm.

3. Panneau d'atténuation acoustique (1) selon l'une quelconque des revendications 1 à 2, **caractérisé en ce que** chaque réseau de parois alvéolaires (9, 10) d'une structure (7, 8) est formé de parois (13, 14) faisant saillie sur une surface interne (44, 47) respective de la peau (3, 6) de ladite structure (7, 8), des encoches (15, 16) étant prévues sur les parois (13, 14) de chaque réseau de parois alvéolaires (9, 10), les encoches (15, 16) des parois (13, 14) d'un réseau de parois alvéolaires (9, 10) étant agencées pour s'insérer de façon complémentaire dans les encoches (15, 16) des parois (13, 14) de l'autre réseau de parois alvéolaires (9, 10), permettant l'emboitement du premier réseau de parois alvéolaires (9) de la structure avant (7) dans le deuxième réseau de parois alvéolaires (10) de la structure arrière (8).

4. Panneau d'atténuation acoustique (1) selon l'une quelconque des revendications 1 à 2, **caractérisé en ce que** les réseaux de parois alvéolaires (9, 10) comprennent chacun des parois de section tronconique (17, 18) se chevauchant l'une par rapport à l'autre pour permettre l'emboitement du premier réseau de parois alvéolaires (9) de la structure avant (7) dans le deuxième réseau de parois alvéolaires (10) de la structure arrière (8).

5. Panneau d'atténuation acoustique (1) selon l'une quelconque des revendications 1 à 4, **caractérisé en ce que**, après assemblage, la structure arrière (8) présente des motifs alvéolaires décalés d'une demi-période par rapport aux motifs alvéolaires de la structure avant (7).

6. Volet d'inverseur de poussée (19) pour nacelle de turboréacteur d'aéronef **caractérisé en ce qu'**il est formé d'un panneau d'atténuation acoustique (1) tel que défini selon l'une quelconque des revendications 1 à 5.

7. Procédé de fabrication d'un panneau d'atténuation acoustique (1) pour nacelle de turboréacteur d'aéronef tel que défini selon l'une quelconque des revendications 1 à 5, **caractérisé en ce qu'**il comprend les étapes suivantes :
- obtention d'une structure avant (7) comportant une peau avant acoustique (3) et un premier réseau de parois alvéolaires (9),
- obtention d'une structure arrière (8) comportant une peau arrière (6) et un deuxième réseau de parois alvéolaires (10),
- assemblage de la structure avant (7) à la structure arrière (8) pour former le panneau d'atténuation acoustique (1), les structures avant (7) et arrière (8) comprenant chacune une bordure périphérique (11, 12), lesdites bordures (11, 12) étant fixées l'une à l'autre pour l'assemblage des structures avant (7) et arrière (8), les premier (9) et deuxième (10) réseaux de parois alvéolaires coopérant ensembles de sorte à former une âme centrale alvéolaire (2) positionnée entre la peau avant acoustique (3) et la peau arrière (6), la structure avant (7) et la structure arrière (8) étant positionnées en regard l'une de l'autre et de façon à ce que le réseau de parois alvéolaires (9, 10) d'une structure (7, 8) soit espacé de la peau (3, 6) de l'autre structure (7, 8) lui faisant face par un jeu d.

8. Procédé de fabrication selon la revendication 7, **caractérisé en ce que**, lors de l'étape d'assemblage, le premier réseau de parois alvéolaires (9) de la structure avant (7) est emboîté dans le deuxième réseau de parois alvéolaires (10) de la structure arrière (8).

9. Procédé de fabrication selon la revendication 8, **caractérisé en ce que**, lors de l'étape d'assemblage, le premier réseau de parois alvéolaires (9) de la structure avant (7) est emboîté dans le deuxième réseau de parois alvéolaires (10) de la structure arrière (8) au moyen d'encoches (15, 16) prévues sur des parois (13, 14) formant chaque réseau de parois alvéolaires (9, 10), les encoches (15, 16) des parois (13, 14) de chaque réseau de parois alvéolaires (9, 10) étant agencées pour s'insérer l'une dans l'autre.

10. Procédé de fabrication selon l'une quelconque des revendications 7 à 9, **caractérisé en ce que**, lors de l'étape d'assemblage, les structures (7, 8) sont fixées entre elles uniquement au niveau de bordures périphériques (11, 12) respectives prévues sur chacune des deux structures (7, 8).

## Patentansprüche

1. Schalldämpfende Platte (1) für die Gondel eines Turbinentriebwerks eines Luftfahrzeugs, umfassend einen wabenförmigen Mittelkern (2), der zwischen einer akustischen Oberseitenhaut (3) mit Perforationen (4) und einer Rückseitenhaut (6) angeordnet ist, wobei die schalldämpfende Platte (1) eine Vorderseitenstruktur (7) und eine Rückseitenstruktur (8) umfasst, so dass die Vorderseitenstruktur (7) die akustische Vorderseitenhaut (3) und eine erste Anordnung von wabenförmigen Wänden (9) umfasst, die Rückseitenstruktur (8) die Rückseitenhaut (6) und eine zweite Anordnung von wabenförmigen Wänden (10) umfasst, die Vorderseiten- (7) und die Rückseitenstruktur (8) einen umlaufenden Rand (11, 12) aufweist, wobei die Ränder (11, 12) zur Montage der Vorderseiten- (7) und der Rückseitenstruktur (8) aneinander befestigt sind, wobei die erste (9) und die zweite (10) Anordnung von wabenförmigen Wänden derart komplementär sind, dass sie in montierter Position den wabenförmigen Mittelkern (2) bilden,
**dadurch gekennzeichnet, dass**:
- die Vorderseitenstruktur (7) und die Rückseitenstruktur (8) einander gegenüberliegend positioniert sind, so dass die Anordnung von wabenförmigen Wänden (9, 10) der einen Struktur (7, 8) von der Haut (3, 6) der anderen Struktur (7, 8), die ihr gegenüberliegt, um einen Abstand d entfernt ist.

2. Schalldämpfende Platte (1) nach Anspruch 1, **dadurch gekennzeichnet, dass** der Abstand d kleiner als 2 mm und vorzugsweise kleiner als 1,5 mm ist.

3. Schalldämpfende Platte (1) nach einem der Ansprüche 1 bis 2, **dadurch gekennzeichnet, dass** jede Anordnung von wabenförmigen Wänden (9, 10) einer Struktur (7, 8) aus Wänden (13, 14) gebildet ist, die von einer Innenfläche (44, 47) jeweils von der Haut (3, 6) der Struktur (7, 8) hervorstehen, wobei Einkerbungen (15, 16) in den Wänden (13, 14) jeder Anordnung von wabenförmigen Wänden (9, 10) vorgesehen sind, wobei die Einkerbungen (15, 16) der Wände (13, 14) einer Anordnung von wabenförmigen Wänden (9, 10) so angeordnet sind, dass sie komplementär in die Einkerbungen (15, 16) der Wände (13, 14) der anderen Anordnung von wabenförmigen Wänden (9, 10) passen, wodurch die erste Anordnung von wabenförmigen Wänden (9) der Vorderseitenstruktur (7) in die zweite Anordnung von wabenförmigen Wänden (10) der Rückseitenstruktur (8) eingefügt werden kann.

4. Schalldämpfende Platte (1) nach einem der Ansprüche 1 bis 2, **dadurch gekennzeichnet, dass** die Anordnung von wabenförmigen Wänden (9, 10) jeweils Wände mit kegelstumpfförmigem Querschnitt (17, 18) umfassen, die einander überlappen, um das Ineinandergreifen der ersten Anordnung von wabenförmigen Wänden (9) der Vorderseitenstruktur (7) in die zweite Anordnung von wabenförmigen Wänden (10) der Rückseitenstruktur (8) zu ermöglichen.

5. Schalldämpfende Platte (1) nach einem der Ansprüche 1 bis 4, **dadurch gekennzeichnet, dass** die Rückseitenstruktur (8) nach der Montage die wabenförmige Muster aufweist, die gegenüber den wabenförmigen Mustern der Vorderseitenstruktur (7) um eine halbe Periode versetzt sind.

6. Klappe für eine Schubumkehrvorrichtung (19) für die Gondel eines Turbinentriebwerkes eines Luftfahrzeugs, **dadurch gekennzeichnet, dass** sie aus einer schalldämpfenden Platte (1) gebildet ist, wie sie nach einem der Ansprüche 1 bis 5 definiert ist.

7. Herstellungsverfahren für eine schalldämpfende Platte (1) für eine Gondel eines Turbinentriebwerkes eines Luftfahrzeugs, wie sie nach einem der Ansprüche 1 bis 5 definiert ist, **dadurch gekennzeichnet, dass** es die folgenden Schritte umfasst:
- Erhalten einer Vorderseitenstruktur (7), die eine akustische Vorderseitenhaut (3) und eine erste Anordnung von wabenförmigen Wänden (9) umfasst,
- Erhalten einer Rückseitenstruktur (8), die eine Rückseitenhaut (6) und eine zweite Anordnung von wabenförmigen Wänden (10) umfasst,
- Montieren der Vorderseitenstruktur (7) an die Rückseitenstruktur (8), um die schalldämpfende Platte (1) zu bilden, wobei die Vorderseiten- (7) und die Rückseitenstruktur (8) jeweils einen umlaufenden Rand (11, 12) aufweisen, wobei die Ränder (11, 12) zur Montage der Vorderseiten- (7) und der Rückseitenstruktur (8) aneinander befestigt sind, wobei die erste (9) und die zweite (10) Anordnung von wabenförmigen Wänden derart zusammenwirken, dass sie einen wabenförmigen Mittelkern (2) bilden, der zwischen der akustischen Vorderseitenhaut (3) und der Rückseitenhaut (6) positioniert ist, wobei die Vorderseitenstruktur (7) und die Rückseitenstruktur (8) einander gegenüberliegend positioniert sind, so dass die Anordnung von wabenförmigen Wänden (9, 10) der einen Struktur (7, 8) von der Haut (3, 6) der anderen Struktur (7, 8), die ihr gegenüberliegt, um einen Abstand d entfernt ist.

8. Herstellungsverfahren nach Anspruch 7, **dadurch gekennzeichnet, dass** die erste Anordnung von wabenförmigen Wänden (9) der Vorderseitenstruktur (7) beim Montageschritt in die zweite Anordnung von wabenförmigen Wänden (10) der Rückseitenstruktur (8) eingefügt wird.

9. Herstellungsverfahren nach Anspruch 8, **dadurch gekennzeichnet, dass** während des Montageschrittes die erste Anordnung von wabenförmigen Wänden (9) der Vorderseitenstruktur (7) in die zweite Anordnung von wabenförmigen Wänden (10) der Rückseitenstruktur (8) mit Hilfe von Einkerbungen (15, 16) eingefügt wird, die in den Wänden (13, 14) vorgesehen sind, die jede Anordnung von wabenförmigen Wänden (9, 10) bilden, wobei die Einkerbungen (15, 16) der Wände (13, 14) jeder Anordnung von wabenförmigen Wänden (9, 10) so angeordnet sind, dass sie ineinander passen.

10. Herstellungsverfahren nach einem der Ansprüche 7 bis 9, **dadurch gekennzeichnet, dass** die Strukturen (7, 8) während des Montageschritts nur auf Höhe der jeweiligen umlaufenden Rändern (11, 12) aneinander befestigt werden, die an jeder der beiden Strukturen (7, 8) vorgesehen sind.

## Claims

1. An acoustic attenuation panel (1) for an aircraft turbojet engine nacelle, including an alveolar central core (2) interposed between an acoustic front skin (3) comprising perforations (4) and a rear skin (6), the acoustic attenuation panel (1) including a front structure (7) and a rear structure (8), such that the front structure (7) includes the acoustic front skin (3) and a first network of alveolar walls (9), the rear structure (8) including the rear skin (6) and a second network of alveolar walls (10), the front (7) and rear (8) structures each comprising a peripheral border (11, 12), said borders (11, 12) being fastened to each other for the assembly of the front (7) and rear (8) structures, the first (9) and second (10) networks of alveolar walls being complementary so as to form, in an assembled position, the alveolar central core (2),
**characterized in that**:
- the front structure (7) and the rear structure (8) are positioned opposite to each other and so that the network of alveolar walls (9, 10) of a structure (7, 8) is spaced from the skin (3, 6) of the other structure (7, 8) facing it by a clearance d.

2. The acoustic attenuation panel (1) according to claim 1, **characterized in that** the clearance d is less than 2 mm and preferably less than 1.5 mm.

3. The acoustic attenuation panel (1) according to any one of claims 1 to 2, **characterized in that** each network of alveolar walls (9, 10) of a structure (7, 8) is formed of walls (13, 14) protruding on a respective inner surface (44, 47) of the skin (3, 6) of said structure (7, 8), notches (15, 16) being provided on the walls (13, 14) of each network of alveolar walls (9, 10), the notches (15, 16) of the walls (13, 14) of a network of alveolar walls (9, 10) being arranged to be inserted, in a complementary manner, into the notches (15, 16) of the walls (13, 14) of the other network of alveolar walls (9, 10), allowing the nesting of the first network of alveolar walls (9) of the front structure (7) into the second network of alveolar walls (10) of the rear structure (8).

4. The acoustic attenuation panel (1) according to any one of claims 1 to 2, **characterized in that** the networks of alveolar walls (9, 10) each comprise walls of a frusto-conical section (17, 18) overlapping relative to each other to allow the nesting of the first network of alveolar walls (9) of the front structure (7) into the second network of alveolar walls (10) of the rear structure (8).

5. The acoustic attenuation panel (1) according to any one of claims 1 to 4, **characterized in that**, after assembly, the rear structure (8) has alveolar patterns offset by a half-period relative to the alveolar patterns of the front structure (7).

6. A thrust reverser flap (19) for an aircraft turbojet engine nacelle **characterized in that** it is formed of an acoustic attenuation panel (1) as defined according to any one of claims 1 to 5.

7. A method for manufacturing an acoustic attenuation panel (1) for an aircraft turbojet engine nacelle as defined according to any one of claims 1 to 5, **characterized in that** it comprises the following steps:
- obtaining a front structure (7) including an acoustic front skin (3) and a first network of alveolar walls (9),
- obtaining a rear structure (8) including a rear skin (6) and a second network of alveolar walls (10),
- assembling the front structure (7) to the rear structure (8) to form the acoustic attenuation panel (1), the front (7) and rear (8) structures each comprising a peripheral border (11, 12), said borders (11, 12) being fastened to each other for the assembly of the front (7) and rear (8) structures, the first (9) and second (10) networks of alveolar walls cooperating together so as to form an alveolar central core (2) which is positioned between the acoustic front skin (3) and the rear skin (6), the front structure (7) and the rear structure (8) being positioned opposite to each other and so that the network of alveolar walls (9, 10) of a structure (7, 8) is spaced from the skin (3, 6) of the other structure (7, 8) facing it by a clearance d.

8. The manufacturing method according to claim 7, **characterized in that**, during the assembly step, the first network of alveolar walls (9) of the front structure (7) is nested into the second network of alveolar walls (10) of the rear structure (8).

9. The manufacturing method according to claim 8, **characterized in that**, during the assembly step, the first network of alveolar walls (9) of the front structure (7) is nested into the second network of alveolar walls (10) of the rear structure (8) by means of notches (15, 16) provided on walls (13, 14) forming each network of alveolar walls (9, 10), the notches (15, 16) of the walls (13, 14) of each network of alveolar walls (9, 10) being arranged to be inserted into each other.

10. The manufacturing method according to any one of claims 7 to 9, **characterized in that**, during the assembly step, the structures (7, 8) are fastened to each other only at respective peripheral borders (11, 12) provided on each of the two structures (7, 8).
